# EUROPEAN PATENT APPLICATION

(11) **EP 4 678 590 A1**
(43) Date of publication of application: **14.01.2026**
(21) Application number: 24020232.5
(22) Date of filing: 10.07.2024
(51) Int. Cl.: B66F 7/24, B60T 3/00

(54) **FOLDABLE BASE MOBILE HOME LEVELING BLOCKS WITH INTEGRATED TRACTION BOARD FUNCTIONALITY**

(71) Applicant: Sattler, Thomas, 08525 Plauen (DE)
(72) Inventor: Sattler, Thomas, 08525 Plauen (DE)

(57) **Abstract**

The invention discloses an advanced leveling block system for mobile homes and caravans, incorporating a foldable base to extend leveling capabilities and multifunctional use. Traditional leveling blocks are limited to a maximum height of approximately 10 cm, often inadequate for proper vehicle leveling. This novel system introduces a foldable base unit that offers four distinct configurations: (1) leveling up to a basic industry level using the upper block alone, (2) leveling up to raised height with the upper block on the unfolded base, (3) leveling up to maximum height with the upper block on the folded base, and (4) employing the base as a Traction board to enhance traction on slippery surfaces such as mud or sand. The foldable base not only increases the maximum leveling height but also provides essential support in adverse ground conditions, ensuring optimal stability and safety. This innovative design addresses the limitations of existing products, providing a comprehensive solution for leveling and ground traction challenges faced by mobile home and caravan users.

## Description

### BACKGROUND

### Field of the Invention:

The invention pertains to a multifunctional device that combines a traction board and leveling block into one seamless product, designed to assist vehicles in gaining traction and maintaining stability on uneven terrains. Additionally, the invention includes an interlocking mechanism, potentially in a trapezoid shape, to enhance its functionality.

### Description of the Related Art:

The present invention pertains to the field of recreational vehicles (RVs), specifically focusing on leveling devices for mobile homes and caravans. Leveling blocks are critical tools used to stabilize RVs when parked on uneven terrain, ensuring the vehicle remains level for operational and safety purposes. A level RV ensures the proper functioning of various systems such as refrigeration, plumbing, and slide-out mechanisms, while also providing a comfortable living environment for the occupants.

Leveling blocks provide several essential benefits, including preventing structural damage and ensuring the smooth operation of appliances and systems within the RV. Proper leveling enhances safety by reducing the risk of vehicle tipping and contributes to the overall longevity of the RV by minimizing strain on the suspension and tires. Additionally, a level vehicle enhances comfort by providing a stable platform, making it easier for occupants to move around and use onboard facilities.

The global recreational vehicle market has experienced significant growth, with the market valued at approximately $55 billion in 2020 and projected to continue expanding. The popularity of RV travel has increased demand for reliable and efficient leveling solutions. Despite various products available, many RV owners report dissatisfaction with current leveling blocks, indicating a substantial market need for improved solutions. Studies have shown that over 60% of RV owners encounter issues with leveling their vehicles, highlighting the inadequacy of existing products.

Several advancements have been made in leveling block technology, including the introduction of graduated steps for finer height adjustments, heavy-duty materials for enhanced durability, and integrated chocks for added stability. Some manufacturers have developed digital leveling systems with sensors and automated features to assist users in achieving precise leveling. While these innovations represent significant progress, they often come with increased complexity and higher costs, limiting their accessibility to the broader RV owner community.

Despite these innovations, existing leveling blocks face notable limitations. The maximum leveling height offered by most products is around 10 cm, which is often insufficient for highly uneven terrains. Additionally, current leveling blocks typically do not provide multifunctional capabilities, such as traction enhancement for slippery surfaces. Consequently, RV owners often need to purchase additional equipment, such as sand boards, to address traction issues, leading to higher costs and storage challenges.

The present invention addresses these limitations by introducing a foldable base mobile home leveling block system with integrated sand board functionality. This innovative design comprises an upper leveling block and a foldable base unit that can be configured to achieve various leveling heights and used as a traction aid. The system offers four primary configurations: (1) leveling using the upper block alone, (2) leveling with the upper block on the unfolded base, (3) leveling with the upper block on the folded base, and (4) using the base part as a sand board for enhanced traction on slippery surfaces.

The foldable base extends functionality, bridges these gaps by combining both leveling and traction utilities into a single product. The 2-in-1 design offers four versatile functions of leveling, alongside serving as a traction sand board. The modular base transforms smoothly from a standard leveling tool to a high-efficiency traction board, optimized for a variety of terrains and conditions. A unique trapezoid interlocking mechanism ensures robust and reliable performance.

The foldable base applies innovative design principles to tackle the shortcomings of contemporary products. It eliminates the need for separate leveling and traction tools, saving users both space and expense. The trapezoid interlocking mechanism adds an extra layer of security and reliability, making it a superior option for outdoor aficionados. By addressing the multiple needs of stability and traction in one versatile product, the proposed invention fulfills a significant market gap and redefines user convenience and efficiency in off-road and outdoor activities

None of the previous inventions and patents, taken either singly or in combination, is seen to describe the instant invention as claimed. Hence, the inventor of the present invention proposes to resolve and surmount existent technical difficulties to eliminate the aforementioned shortcomings of prior art.

### SUMMARY

In light of the disadvantages of the prior art, the following summary is provided to facilitate an understanding of some of the innovative features unique to the present invention and is not intended to be a full description. A full appreciation of the various aspects of the invention can be gained by taking the entire specification, claims, drawings, and abstract as a whole.

The primary desirable object of the present invention is to provide a novel and improved form of a versatile leveling solution that can be adjusted to different heights, accommodating various degrees of uneven terrain.

It is also the objective of the invention to enhance the stability and safety of mobile homes and caravans when parked, preventing tipping or tilting.

Another object of this invention is to provide a new and improved offer multifunctional design that includes the capability of being used as a Traction board, increasing traction on slippery surfaces like mud or sand.

It is an object of the invention to reduce the need for multiple leveling devices by combining several functionalities into a single, compact system.

It is also the objective of the invention to simplify the leveling process with a foldable base unit, making it easy to adjust and secure the mobile home or caravan at the desired height.

It is moreover the objective of the invention to ensure the leveling blocks are lightweight yet durable, constructed from materials that withstand the harsh conditions encountered during travel.

It is also the objective of invention to improve the user experience by providing a system that is easy to transport, store, and deploy, thanks to features like handles and stackable components.

It is another object of the invention to offer a reliable and stable support system that prevents the leveling blocks from slipping or shifting during use.

Yet another object of the present invention to extend the maximum leveling height achievable with traditional blocks, allowing for a leveling height.

It is a further aspect of the present invention to provide a cost-effective solution that eliminates the need to purchase multiple separate devices for leveling and traction, thus saving users money and space.

Thus, it is the objective to provide Foldable Base Mobile Home Leveling Blocks with Integrated Traction Board Functionality. Other aspects, advantages, and novel features of the present invention will become apparent from the detailed description of the invention when considered in conjunction with the accompanying drawings.

This Summary is provided merely for the purposes of summarizing some example embodiments, so as to provide a basic understanding of some aspects of the subject matter described herein. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### DESCRIPTION OF THE DRAWINGS

The accompanying figures, where like reference numerals refer to identical or functionally similar elements throughout the separate views, together with the detailed description below, are incorporated in and form part of the specification, and serve to further illustrate embodiments of concepts that include the claimed invention and explain various principles and advantages of those embodiments.
FIG. 1 illustrates the top view of 2 in 1 camper leveling lower block and Traction, as per an embodiment of the present disclosure.
FIG. 2 illustrates the bottom view of 2 in 1 camper leveling lower block and Traction board lower block, as per an embodiment of the present disclosure.
FIG. 3 illustrates the folded top view of 2 in 1 camper leveling lower block and Traction board, as per an embodiment of the present disclosure.
FIG. 4 illustrates the top view of 2 in 1 camper leveling upper block and Traction board, as per an embodiment of the present disclosure.

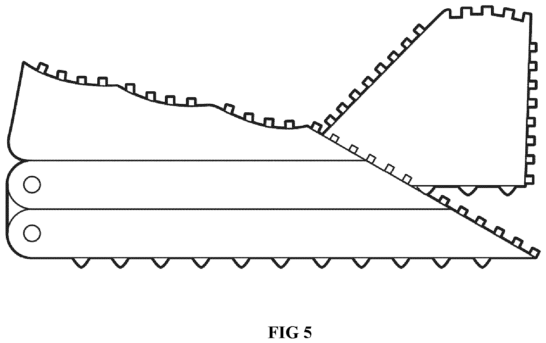

FIG. 5 illustrates the side view of 2 in 1 camper leveling block and Traction board, as per an embodiment of the present disclosure.

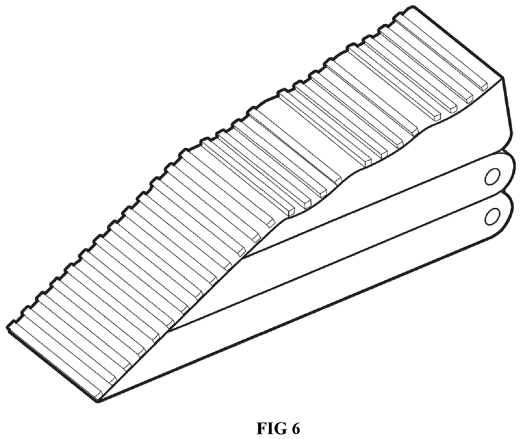

FIG. 6 illustrates the folded view of 2 in 1 camper leveling block and Traction board, as per an embodiment of the present disclosure.

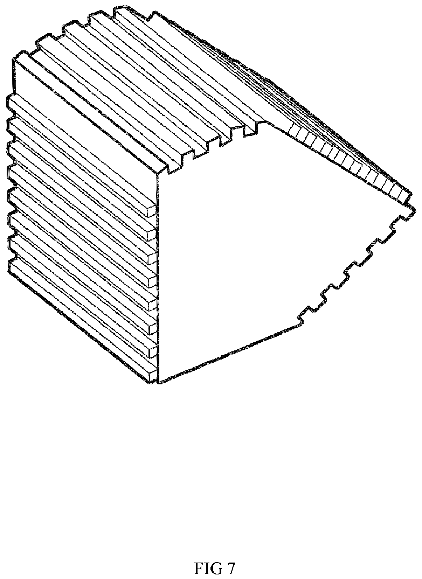

FIG. 7 illustrates the view of chock block, as per an embodiment of the present disclosure.

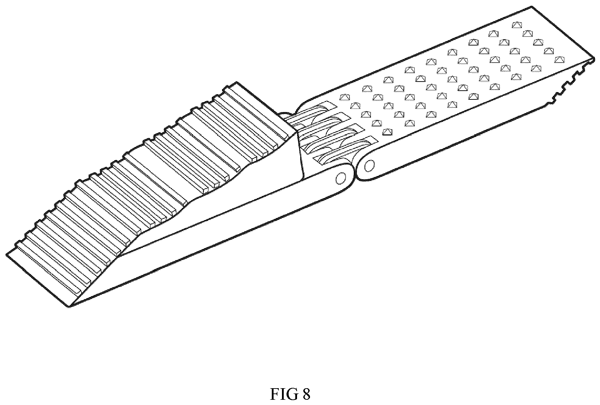

FIG. 8 illustrates the complete view of 2 in 1 camper leveling block and Traction board, as per an embodiment of the present disclosure.

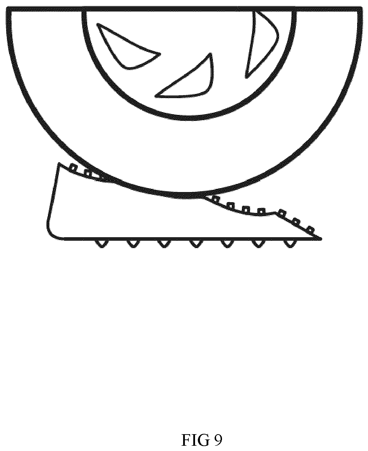

FIG. 9 illustrates case 1, wherein a level up to a certain cm of height is disclosed, as per an embodiment of the present disclosure.

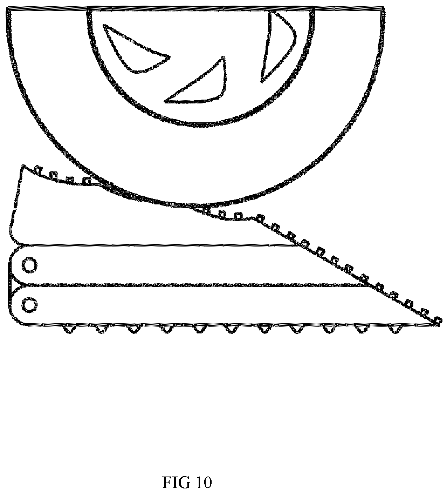

FIG. 10 illustrates case 2, wherein a level up to a certain cm is disclosed and the upper part is fixed on the unfolded lower part, as per an embodiment of the present disclosure.

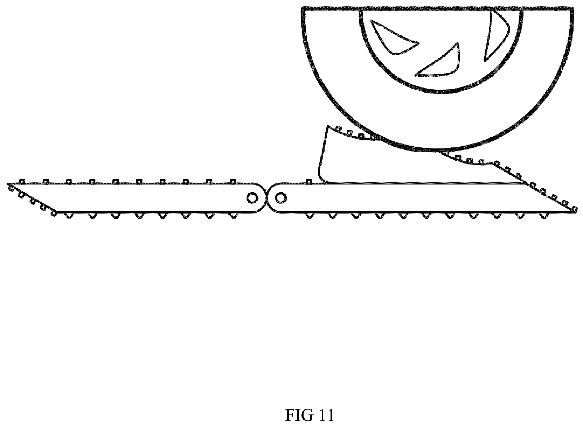

FIG. 11 illustrates case 3 of level up to a certain cm wherein the upper part is fixed on the lower folded part, as per an embodiment of the present disclosure.

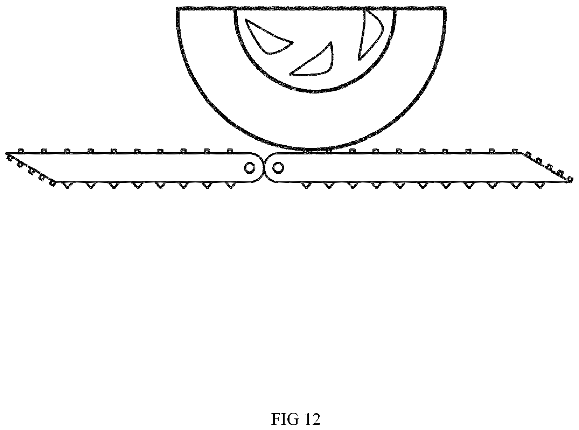

FIG. 12 illustrates case 4 of use as a Traction board, wherein the lower part is unfolded only, as per an embodiment of the present disclosure.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

### DETAILED DESCRIPTION

Detailed descriptions of the preferred embodiment are provided herein. It is to be understood, however, that the present invention may be embodied in various forms. Therefore, specific details disclosed herein are not to be interpreted as limiting, but rather as a basis for the claims and as a representative basis for teaching one skilled in the art to employ the present invention in virtually any appropriately detailed system, structure or manner.

The terminology used herein is for the purpose of describing particular embodiments only and is not intended to be limiting of the invention. As used herein, the term "and/or" includes any and all combinations of one or more of the associated listed items. As used herein, the singular forms "a," "an," and "the" are intended to include the plural forms as well as the singular forms, unless the context clearly indicates otherwise. It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof.

This invention pertains to an advanced leveling block system designed for mobile homes and caravans, addressing the shortcomings of existing leveling solutions. Traditional leveling blocks offer limited height adjustment, often inadequate for ensuring stability on uneven terrain. This novel system incorporates a foldable base unit that extends the maximum leveling height and introduces multifunctional features, including use as a Traction board slippery surfaces. The invention aims to provide a comprehensive solution for enhancing the stability, safety, and user experience of mobile home and caravan users.

As per its preferred embodiments, the leveling block system comprises two primary components: an upper leveling block and a foldable base unit. The upper leveling block is designed to support the weight of a mobile home or caravan and offers an initial leveling height of a particular cm. The foldable base unit attaches to the upper block and can be configured in either a folded or unfolded state to achieve different leveling heights. This modular approach allows users to customize the height based on the specific requirements of their parking terrain.

As per its further embodiments, in its unfolded configuration, the base unit enhances the leveling height. This intermediate height is suitable for moderately uneven surfaces where the initial lower adjustment is insufficient. The base unit's design ensures that it remains stable and securely interlocked with the upper block, preventing any unintended shifting or slipping during use. This configuration provides additional stability and ensures a more level parking surface, contributing to the overall comfort and safety of the mobile home or caravan.

As per its further embodiments, for more extreme leveling needs, the base unit can be used in its folded configuration, which elevates the leveling height to a particular cm. This maximum height is particularly useful for severely uneven or sloped terrains where greater adjustment is necessary. The foldable mechanism of the base unit is engineered to withstand significant weight and pressure, maintaining its integrity and stability under the load of the vehicle. This versatility in height adjustment makes the system adaptable to a wide range of parking conditions.

As per its further embodiments, beyond its primary function as a leveling block, the foldable base unit also serves as a Traction board. In challenging environments such as mud or sand, the base unit can be deployed to provide traction and prevent the vehicle from becoming stuck. The surface of the base unit is designed with traction-enhancing features, such as grooves or textured patterns, to maximize grip on slippery surfaces. This dual functionality extends the utility of the leveling block system, making it an essential tool for mobile home and caravan users.

As per its further embodiments, the materials used in constructing the leveling block system are selected for their durability, lightweight properties, and resistance to environmental factors. The upper block and base unit are typically made from high-strength plastic or composite materials that can withstand the harsh conditions encountered during travel and use. Additionally, the system includes anti-slip surfaces on both components to further enhance stability and safety during use. These design considerations ensure the longevity and reliability of the leveling block system.

As per its further embodiments, for ease of use and portability, the foldable base unit is equipped with features such as hinges or pivot points for smooth folding and unfolding, and a handle for convenient transportation. When not in use, the components can be stacked or nested together, reducing the storage space required. The base unit also includes slots or holes for anchoring to the ground, providing extra stability on soft or loose surfaces. These user-friendly design elements make the leveling block system practical and efficient for mobile home and caravan owners.

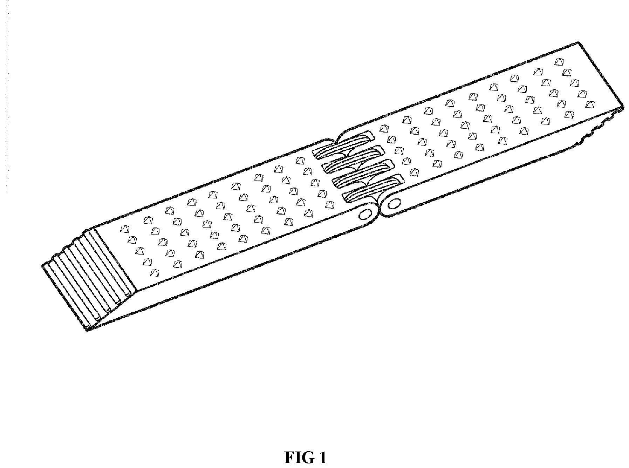

By looking at the provided figures, functionality can be further understood, the Fig 1 illustrates a versatile 2-in-1 camper leveling block and Traction board system designed for mobile homes and caravans. It consists of an upper leveling block and a foldable lower base part. The upper block provides a leveling height of a particular level. The lower base, when unfolded, extends the height, and when folded, elevates it further. Additionally, the lower part functions as a Traction board on slippery surfaces like mud or sand. The system also includes a chock block to prevent vehicle movement. Constructed from durable materials with anti-slip features, this multi-functional design offers various configurations for different leveling needs, enhancing stability, safety, and overall user convenience.

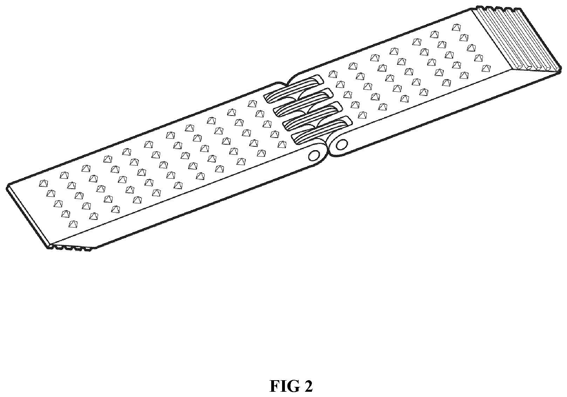

Figure 2 illustrates the foldable base component of the 2-in-1 camper leveling block and Traction board system in various configurations. The upper part (leveling block) remains constant, providing the initial leveling height. The lower part, shown in both its unfolded and folded states, demonstrates its multifunctional capabilities. In the unfolded configuration, the lower part extends the base, providing additional height and a larger surface area for improved stability on moderately uneven terrains, achieving a leveling height. In its folded state, the lower part compacts to support the upper part, allowing for a maximum leveling height, suitable for significantly uneven terrains. Additionally, the lower part's surface features traction-enhancing grooves, enabling its use as a Traction board for traction on slippery surfaces such as mud or sand. The system also includes a chock block, depicted separately, designed to prevent vehicle movement by securing the tire. The entire assembly is constructed from high-strength, durable plastic materials with anti-slip features to ensure stability and safety during use.

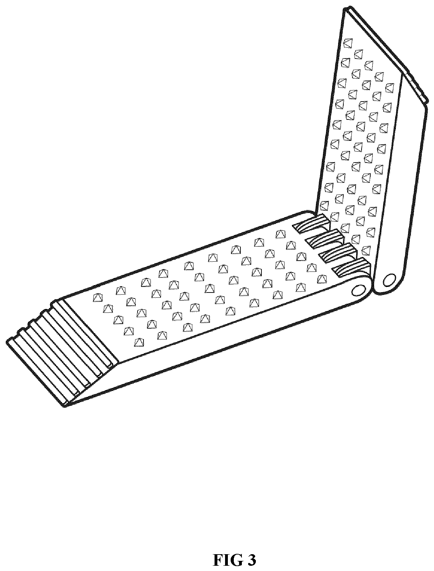

Figure 3 illustrates the side view of the 2-in-1 camper leveling block and Traction board system, showcasing its dimensions and structural design in various configurations. The upper part (leveling block) is depicted atop the lower base part, highlighting the combined height adjustments possible. The system allows for a basic leveling height when using the upper part alone. The lower part is shown in a folded state, adding two segments, resulting in a maximum combined height. The unfolded configuration of the lower part provides an extended height. The total length of the system, when extended, ensures a stable base for the vehicle. The stability rating is specified at 40 kN per pair, indicating its robust capacity to support the weight of mobile homes and caravans. The grooves and textured patterns on the upper and lower parts enhance traction and prevent slippage, ensuring safety during use.

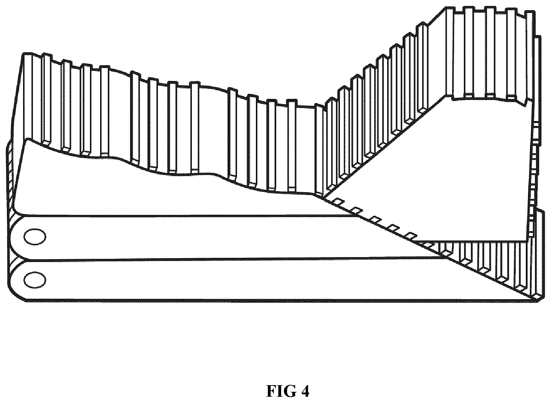

Figure 4 illustrates four operational configurations of the 2-in-1 camper leveling block and Traction board system. In Case 1, the upper part provides a leveling height level 1 for minor adjustments. Case 2 shows the upper part on the unfolded lower part, offering a raised height for moderately uneven terrain. In Case 3, the upper part on the folded lower part achieves a maximum height for significantly uneven surfaces. Case 4 demonstrates the unfolded lower part used as a Traction board, enhancing traction on slippery surfaces like mud or sand. Each configuration is designed for specific leveling needs, ensuring stability and safety. The system's durable construction and textured surfaces prevent slippage, making it a versatile solution for mobile home and caravan owners.

As per its further embodiments, by integrating these innovative features, the foldable base mobile home leveling block system addresses the limitations of existing solutions and provides a versatile, reliable, and multifunctional tool for ensuring vehicle stability on a variety of terrains.

While a specific embodiment has been shown and described, many variations are possible. With time, additional features may be employed. The particular shape or configuration of the platform or the interior configuration may be changed to suit the system or equipment with which it is used.

Having described the invention in detail, those skilled in the art will appreciate that modifications may be made to the invention without departing from its spirit. Therefore, it is not intended that the scope of the invention be limited to the specific embodiment illustrated and described. Rather, it is intended that the scope of this invention be determined by the appended claims and their equivalents.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

## Claims

1. A leveling block system for mobile homes and caravans, comprising:
an upper leveling block;
a foldable base unit attachable to the upper leveling block;
wherein the foldable base unit includes a folded and an unfolded configuration to adjust the leveling height.

2. The leveling block system of claim 1, wherein the upper leveling block provides a leveling height of first level.

3. The leveling block system of claim 1, wherein the upper leveling block combined with the unfolded base unit provides a leveling height of raised height.

4. The leveling block system of claim 1, wherein the upper leveling block combined with the folded base unit provides a maximum leveling height.

5. The leveling block system of claim 1, wherein the foldable base unit functions as a Traction board to enhance traction on slippery surfaces.

6. The leveling block system of claim 1, wherein the foldable base unit is constructed from a durable, lightweight material suitable for supporting the weight of a mobile home or caravan.

7. The leveling block system of claim 1, wherein the upper leveling block and foldable base unit include interlocking features to secure the blocks in place during use.

8. The leveling block system of claim 1, wherein the foldable base unit includes hinges or pivot points to facilitate folding and unfolding.

9. The leveling block system of claim 1, further comprising anti-slip surfaces on the upper leveling block and foldable base unit to prevent slippage.

10. The leveling block system of claim 1, wherein the foldable base unit includes a handle for easy transportation and deployment.

11. The leveling block system of claim 1, wherein the upper leveling block and foldable base unit are stackable for compact storage.

12. The leveling block system of claim 1, wherein the foldable base unit includes slots or holes for anchoring to the ground to provide additional stability.

13. The leveling block system of claim 1, wherein the upper leveling block includes an angled surface to accommodate different wheel sizes and shapes.

14. The leveling block system of claim 1, wherein the foldable base unit includes markings to indicate different leveling heights for precise adjustments.

15. The leveling block system of claim 1, wherein the upper leveling block and foldable base unit are designed to distribute weight evenly to prevent sinking into soft ground.
